# FASCICULE DE BREVET EUROPEEN

(11) **EP 1 070 258 B1**
(45) Date de publication et mention de la délivrance du brevet: **06.08.2003**
(21) Numéro de dépôt: 99913370.5
(22) Date de dépôt: 09.04.1999
(51) Int. Cl.: G01P 3/44

(54) **DISPOSITIF DE FIXATION D'UN CAPTEUR D'INFORMATIONS POUR ROULEMENT OU PALIER**
VORRICHTUNG ZUR BEFESTIGUNG EINES MESSWERTAUFNEHMERS AN EINEM WÄLZLAGER
DEVICE FOR FIXING A DATA SENSOR FOR BALL BEARING OR PLUMMER BLOCK

(30) Priorité: 10.04.1998 FR 9804539
(43) Date de publication de la demande: 24.01.2001
(73) Titulaire: SNR ROULEMENTS, 74010 Annecy Cédex (FR)
(72) Inventeur: NICOT, Christophe, F-74330 Epagny (FR)
(74) Mandataire: Srour, Elie
(86) Numéro de dépôt international: FR9900824
(87) Numéro de publication internationale: WO99053325

(56) Documents cités:
- EP-A- 0 767 385
- FR-A- 2 730 283
- US-A- 5 550 467

## Description

L'invention concerne un dispositif de fixation d'un capteur d'information fixe sans contact en regard d'un palier ou roulement équipé d'un élément codeur pouvant être lu par ledit capteur.

Les publications FR2 703 740, FR 2 730 283 et FR 2 740 186 décrivent différents supports de capteur fixé dans l'environnement de la bague fixe d'un palier. Ces supports sont de forme générale annulaire et comportent une glissière dans laquelle le capteur est monté et maintenu à l'aide de moyens d'immobilisation élastique.

Toutefois, comme on peut le voir sur ces différents documents, la diversité dans le montage des roulements entraîné une diversité dans la conception des supports de capteur d'information qui peuvent être fixés à l'une ou à l'autre des bagues du roulement selon que la bague tournante est soit la bague extérieure soit la bague intérieure. Les supports peuvent également être pincés entre la bague fixe et un élément de montage du train ou encore adaptés sur une armature de joint d'étanchéité.

Cette diversité dans la réalisation des supports de capteur conduit à l'étude et à la qualification d'un outillage spécifique pour la réalisation du support de chaque application envisagée, ce qui engendre des surcoûts importants.

L'invention vise à résoudre ces inconvénients et également à proposer un dispositif de fixation assurant une immobilisation aisée du capteur sur le support et qui soit simple et économique à réaliser. A cet effet, l'invention concerne un dispositif de fixation d'un capteur d'informations pour roulement ou palier dans lequel un élément codeur est lié à une bague tournante qui est séparée par des corps roulants d'une bague fixe, comprenant un support destiné à recevoir ledit capteur et immobile par rapport à la bague fixe, caractérisé en ce que le support comporte au moins un premier élément et un second élément assemblés l'un à l'autre, le premier élément étant solidaire de la bague fixe, le second élément intégrant l'ensemble des fonctions de guidage et d'immobilisation du capteur sur le support.

Selon une autre caractéristique de l'invention, le premier élément est monté sur la bague fixe.

Selon encore une autre caractéristique de l'invention, le second élément comporte une armature de forme sensiblement parallélépipédique destinée à envelopper le capteur, l'armature possédant une entrée comportant des bords de guidage coopérant avec le capteur.

Selon une autre caractéristique de l'invention, le second élément comporte une glissière de montage du capteur et des languettes élastiques coopérant avec le capteur pour immobiliser ce dernier en position.

Selon une autre caractéristique de l'invention, le second élément comporte une pluralité d'éléments de fixation disposés dans des plans perpendiculaires permettant son assemblage sur différents premier éléments et/ou suivant différentes orientations pour permettre le montage radial ou axial, du second élément sur le premier élément.

Selon une autre caractéristique de l'invention, le premier élément comporte un disque annulaire muni d'un collet venant s'emmancher sur la bague fixe.

Selon une autre caractéristique de l'invention, le disque annulaire constitue un déflecteur qui coopère avec une garniture d'étanchéité du roulement ou palier, les surfaces du disque annulaire et du collet et de la garniture d'étanchéité présentant des états de surface complémentaires au niveau de leur surface de contact, réalisant ainsi une étanchéïté dynamique.

Selon une autre caractéristique de l'invention, les premiers et second éléments sont réalisés dans des matériaux de nature différente tels qu'un acier et un matériau plastique.

Selon une autre caractéristique de l'invention, les premier et second éléments sont assemblés par soudage.

D'autres caractéristiques et avantages apparaîtront à la lecture de la description d'un exemple de dispositif selon l'invention, en référence aux dessins dans lesquels :
- la figure 1 est une vue en coupe d'un exemple du support selon l'invention monté sur une roue motrice automobile,
- la figure 2 est une vue en perspective du support selon l'invention permettant le montage axial d'un capteur,
- la figure 3 est une vue en perspective du premier élément du support selon l'invention,
- la figure 4 est une vue en perspective du second élément du support selon l'invention,
- la figure 5 est une vue de coté du second élément de la figure 4,
- la figure 6 est une vue partielle en perspective d'une première variante de montage du support selon l'invention pour le montage radial d'un capteur,
- la figure 7 est une vue partielle en perspective d'une seconde variante de montage du support selon l'invention pour un roulement à bague extérieure fixe.

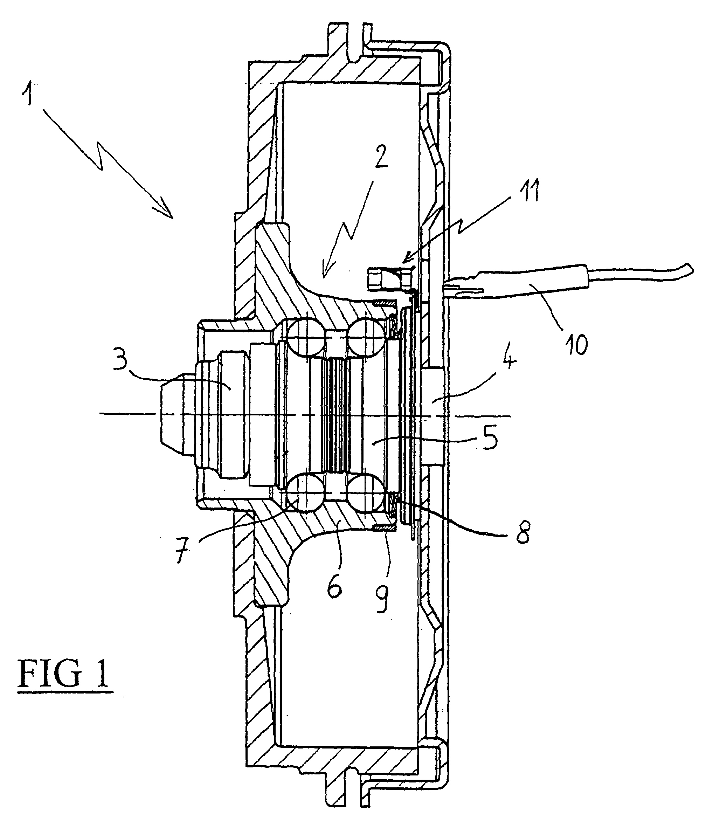

La figure 1 représente le montage d'un moyeu 1 de roue dans lequel un palier 2 à roulements est fixé par serrage, au moyen d'un écrou 3, contre un épaulement de la fusée de roue 4. Le palier 2 à roulements, de dimensions standard, est constitué d'une bague fixe 5 et d'une bague tournante 6, séparées par des corps roulants 7. Il est rendu étanche à l'aide d'une garniture d'étanchéité 8. La bague tournante 6 est équipée d'un dispositif à codeur magnétique 9, monté par exemple par frettage, dont la rotation est détectée par un capteur fixe 10 maintenu à un entrefer donné de la surface du codeur 9 par un support 11 monté sur la bague fixe 5.

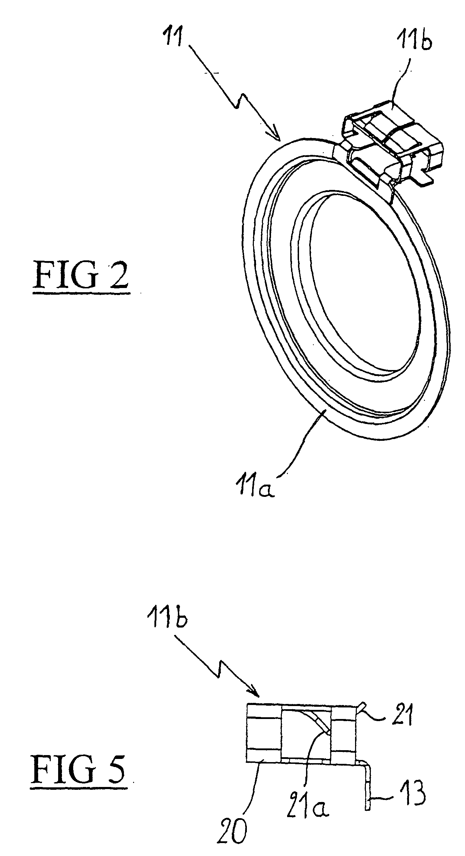

Le support 11, représenté sur la figure 2, est constitué d'un premier élément 11a et d'un second élément 11b, assemblés de manière rigide l'un à l'autre par un procédé tel que la soudure par point. Bien entendu, dans des variantes de réalisation, les premier et second éléments 11a et 11b peuvent également être assemblés par collage ou par des moyens mécaniques tels que l'agrafage ou le rivetage.

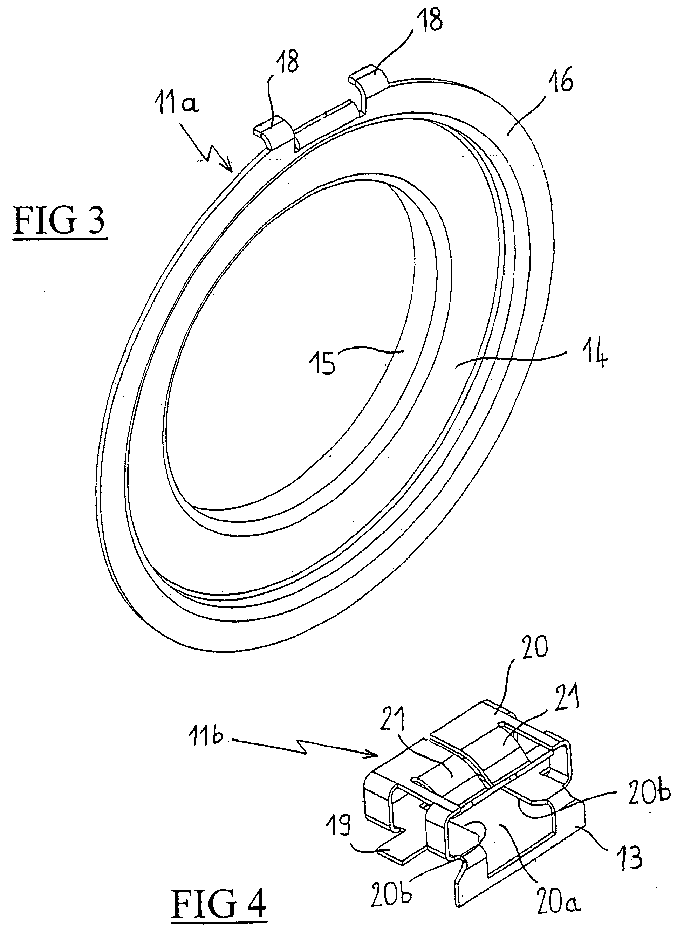

Le premier élément 11a, représenté séparément sur la figure 3, comporte un disque central 14, de forme sensiblement annulaire, muni en son centre d'un collet 15. Avantageusement, le disque- central 14 présente une zone dont l'état de surface est adapté pour coopérer avec une lèvre de la garniture d'étanchéité 8, lors du montage par frettage du support 11 sur la bague fixe 5, et assurer ainsi l'étanchéité du roulement.

Le premier élément 11a comporte également une partie annulaire 16 périphérique s'étendant radialement vers l'extérieur, dans un plan décalé de celui du disque central 14, et muni de pattes 18 destinées à être soudées au second élément 11b.

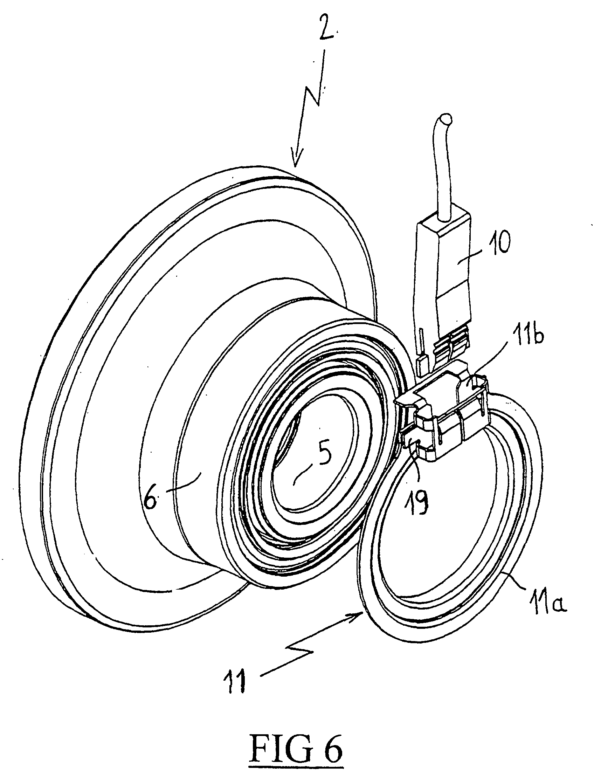

Le second élément 11b, représenté séparément sur les figures 4 et 5, est constitué d'une armature 20, de forme sensiblement parallélipipèdique, destinée à entourer le capteur 10. Cette armature 20 comporte, sur une face, une fenêtre 20a présentant une extrémité libre par laquelle est introduit le capteur 10 et des bords latéraux 20b constituant des rails de guidage coopérant avec des rainures réalisées le long des bords latéraux du capteur 10. L'armature 20 comporte également, sur la face opposée à la fenêtre 20a, deux languettes élastiques 21 munies d'un bossage 21a faisant sailli à l'intérieur de l'armature 20 pour venir coopérer avec une cavité formée sur le capteur 10 et immobiliser ce dernier en position. De façon à faciliter l'insertion du capteur 10 à travers l'armature 20, l'extrémité des languettes élastiques 21 est recourbée en direction de l'extérieur et l'extrémité des rails de guidage 20b est chanfreinée de manière à guider le capteur 10 dans l'axe de l'armature 20.

L'armature 20 est rigidifiée par un pontet 13 s'étendant depuis l'extrémité des rails de guidage 20b, perpendiculairement au bord de l'armature 20, et destiné à être soudé aux pattes 18 du premier élément 11a. L'armature 20 comporte également des pattes latérales 19 disposées dans un plan perpendiculaire au plan du pontet 13 et permettant la fixation du second élément 11b sur le premier élément 11a suivant différentes orientations dans des variantes de réalisation de l'invention.

Conformément à la figure 1, le support 11, ainsi obtenu par l'assemblage des premier et second éléments 11a et 11b, permet d'assurer précisément le maintien du capteur 10 en regard du codeur 9 par la réalisation d'un premier élément 11a offrant une grande rigidité et également d'optimiser la facilité d'insertion et la tenue du capteur 10 à travers le support 11 par la réalisation d'un second élément 11b muni de bonnes caractéristiques élastiques. Ainsi, le premier élément 11a peut être avantageusement réalisé, à faible coût, par l'emboutissage d'une tôle d'acier à faibles caractéristiques mécaniques, la nervure de liaisons entre le disque central 14 et la partie annulaire 16 offrant une grande rigidité au premier élément 11a. Le second élément 11b peut être avantageusement obtenu par un procédé de découpage et de pliage d'une tôle d'acier dont les caractéristiques mécaniques sont adaptées pour procurer une bon effet ressort des languettes 21.

Le dispositif de fixation selon l'invention permet également, en conservant le même second élément 11b de la figure 4 et donc le même capteur 10, de taille standard par exemple, de réaliser différents supports 11 adaptés pour le montage radial ou le montage axial d'un capteur 10. Ainsi, comme on peut le voir sur la figure 6 représentant une variante de réalisation du dispositif de fixation selon l'invention, le second élément 11b peut également être assemblé perpendiculairement au premier élément 11a à l'aide des pattes latérales 19 de manière à permettre le montage radial du capteur 10.

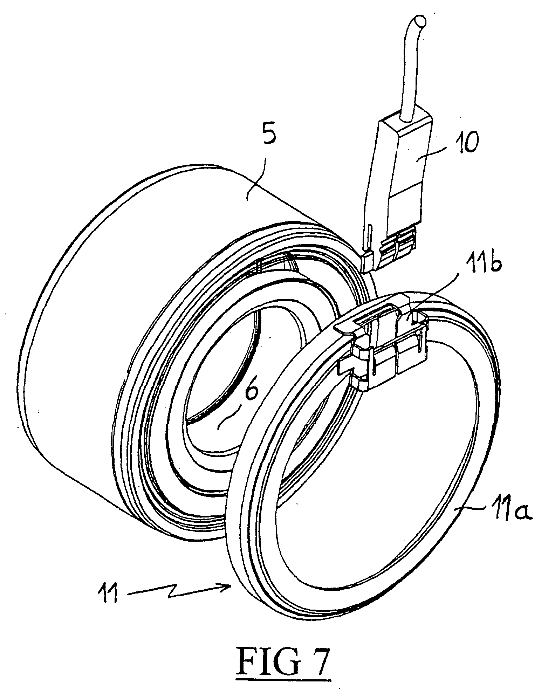

Dans une autre variante de réalisation représenté sur la figure 7, le même second élément 11b peut également être assemblé à un premier élément 11a adapté pour se monter sur une bague fixe 5 extérieure d'un roulement.

Le dispositif de fixation selon l'invention permet donc une adaptation rapide et peu coûteuse du support aux différents besoins liés à la diversité des montages. Par ailleurs, la réalisation du support de capteur à partir d'un premier élément assurant l'immobilisation du support sur la bague fixe et d'un second élément assurant le guidage et l'immobilisation du capteur permet d'optimiser l'épaisseur et le choix des matériaux aux besoins spécifiques de chacun des éléments et ce à moindre coût.

Bien entendu, l'invention n'est nullement limitée au mode de réalisation décrit et illustré qui n'a été donné qu'à titre d'exemple. En particulier, le support de capteur peut être fixé sur tout élément immobile par rapport à la bague fixe disposé au voisinage du capteur comme par exemple le porte-fusée.

## Revendications

1. Dispositif de fixation d'un capteur (10) d'informations pour roulement ou palier dans lequel un élément codeur (9) est lié à une bague tournante (6) qui est séparée par des corps roulants (7) d'une bague fixe (5), comprenant un support (II) destiné à recevoir ledit capteur (10) et immobile par rapport à la bague fixe (5), **caractérisé en ce que** ledit support (11) comporte au moins un premier élément (11a) et un second élément (11b) assemblés l'un à l'autre, ledit premier élément (11a) étant solidaire de la bague fixe (5), ledit second élément (11b) intégrant l'ensemble des fonctions de guidage et d'immobilisation dudit capteur (10) sur ledit support (11).

2. Dispositif de fixation selon la revendication 1, **caractérisé en ce que** ledit premier élément (11a) est monté sur la bague fixe (5).

3. Dispositif de fixation selon l'une quelconque des revendications 1 à 2, **caractérisé en ce que** ledit second élément (11b) comporte une armature (20) de forme sensiblement parallélépipédique destinée à envelopper le capteur (10), ladite armature (20) possédant une entrée comportant des bords de guidage coopérant avec le capteur (10).

4. Dispositif de fixation selon l'une quelconque des revendications 1 à 3, **caractérisé en ce que** ledit second élément (11b) comporte une glissière de montage (20b) du capteur (10) et des languettes élastiques (21) coopérant avec le capteur (10) pour immobiliser ce dernier en position.

5. Dispositif de fixation selon l'une quelconque des revendications 1 à 4, **caractérisé en ce que** ledit second élément (11b) comporte des premiers éléments de fixation (13) compris dans un plan perpendiculaire à l'axe de la glissière (20b) permettant l'assemblage dudit second élément (11b) sur le premier élément (11a) dans le plan dudit premier élément (11a).

6. Dispositif de fixation selon la revendication 5, **caractérisé en ce que** ledit second élément (11b) comporte des deuxièmes éléments de fixation (19) compris dans un plan perpendiculaire à l'axe de la glissière (20b) et perpendiculaire au plan des premiers éléments de fixation (13) permettant l'assemblage dudit second élément (11b) sur le premier élément (11a) dans un plan perpendiculaire au plan dudit premier élément (11a).

7. Dispositif de fixation selon l'une quelconque des revendications précédentes, **caractérisé en ce que** ledit premier élément (11a) comporte un disque annulaire (14) muni d'un collet (15) venant s'emmancher sur la bague fixe (5).

8. Dispositif de fixation selon la revendication 7, **caractérisé en ce que** ledit disque annulaire (14) constitue un déflecteur qui coopère avec une garniture d'étanchéité (8) du roulement ou palier, les surfaces du disque annulaire (14) et du collet (15) et de ladite garniture d'étanchéité (8) présentant un état de surface complémentaire à l'endroit de leur surface de contact, réalisant ainsi une étanchéité dynamique.

9. Dispositif de fixation selon l'une quelconque des revendications précédentes, **caractérisé en ce que** les premier et second éléments (11a) et (11b) sont réalisés dans des matériaux différents, tels qu'un acier et un matériau plastique.

10. Dispositif de fixation selon l'une quelconque des revendications précédentes, **caractérisé en ce que** lesdits premier et second éléments (11a,11b) sont assemblés par soudage.

## Patentansprüche

1. Vorrichtung zur Befestigung eines Informationsfühlers (10) für ein Rollenlager oder ein Kugellager, wobei eine Kodiereinrichtung (9) mit einem sich drehenden Ring (6) verbunden ist, der über Rollkörper (7) von einem feststehenden Ring (5) getrennt ist, mit einer Halterung (11) zur Aufnahme des Fühlers (10) und zu dessen Feststellung relativ zum feststehenden Ring (5), **dadurch gekennzeichnet, dass** die Halterung (11) wenigstens ein erstes Element (11a) und ein zweites Element (11b) aufweist, die miteinander verbunden sind, wobei das erste Element (11a) fest mit dem feststehenden Ring (5) verbunden ist und das zweite Element (11b) die Funktionen des Führens und der Feststellung des Fühlers (10) in der Halterung (11) in sich vereinigt.

2. Vorrichtung zur Befestigung nach Anspruch 1, **dadurch gekennzeichnet**, class das erste Element (11a) am feststehenden Ring (5) angeordnet ist.

3. Vorrichtung zur Befestigung nach einem der Ansprüche 1 bis 2, **dadurch gekennzeichnet, dass** das zweite Element (11b) eine Armatur (20) mit im wesentlichen parallelepipedförmiger Gestalt aufweist, die den Fühler (10) umgibt, wobei die Armatur (20) mit einem Einlass versehen ist, der Führungsränder aufweist, die mit dem Fühler zusammen wirken.

4. Vorrichtung zur Befestigung nach einem der Ansprüche 1 bis 3, **dadurch gekennzeichnet, dass** das zweite Element (11b) eine Gleitschiene (20b) für den Fühler (10) aufweist sowie elastische Zungen (21), die mit dem Fühler (10) zusammen wirken um ihn in seiner Stellung festzuhalten.

5. Vorrichtung zur Befestigung nach einem der Ansprüche 1 bis 4, **dadurch gekennzeichnet, dass** das zweite Element (11b) erste Befestigungsteile (13) aufweist in einer Ebene senkrecht zur Achse der Gleitschiene (20b), die den Zusammenbau des zweiten Elementes (11b) mit dem ersten Element (11a) in der Ebene des ersten Elementes (11a) ermöglichen.

6. Vorrichtung zur Befestigung nach Anspruch 5, **dadurch gekennzeichnet, dass** das zweite Element (11b) zweite Befestigungsteile (19) aufweist in einer Ebene senkrecht zur Achse der Gleitschiene (20b) und senkrecht zur Ebene der ersten Befestigungsteile (13), die den Zusammenbau des zweiten Elementes (11b) mit dem ersten Element (11a) in einer Ebene senkrecht zur Ebene des ersten Elementes (11a) ermöglichen.

7. Vorrichtung zur Befestigung nach einem der vorhergehenden Ansprüche, **dadurch gekennzeichnet, dass** das erste Element (11a) eine ringförmige Scheibe (14) aufweist, die mit einem in den feststehenden Ring (5) eingreifenden Flansch (15) versehen ist.

8. Vorrichtung zur Befestigung nach Anspruch 7, **dadurch gekennzeichnet, dass** die ringförmige Scheibe (14) einen Abweiser bildet, der mit einer Dichtanordnung (8) des Rollenlagers oder Kugellagers zusammen wirkt, wobei die Oberflächen der ringförmigen Scheibe (14) und des Flansches (15) sowie der Dichtanordnung (8) einen Oberflächenzustand aufweisen, der komplementär ist zu ihrem Kontaktbereich, sodass eine dynamische Abdichtung bewirkt wird.

9. Vorrichtung zur Befestigung nach einem der vorhergehenden Ansprüche, **dadurch gekennzeichnet, dass** das erste Element (11a) und das zweite Element (11b) aus verschiedenen Materialien, wie Stahl und Kunststoff, bestehen.

10. Vorrichtung zur Befestigung nach einem der vorhergehenden Ansprüche, **dadurch gekennzeichnet, dass** die beiden Elemente (11a, 11b) durch ein Schweißverfahren miteinander verbunden worden sind.

## Claims

1. Device for fixing a data sensor (10) for a rolling bearing or bearing wherein an encoding element (9) is connected to a rotating ring (6) that is separated by rolling bodies (7) from a fixed ring (5), comprising a support (11) intended to receive said sensor (10) and immobile with respect to the fixed ring (5), **characterised in that** said support (11) comprises at least a first element (11a) and a second element (11b) assembled one with the other, said first element (11a) being integral with the fixed ring (5), said second element (11b) integrating all of the functions of guiding and immobilisation of said sensor (10) upon said support (11).

2. Fixing device according to claim 1, **characterised in that** said first element (11a) is mounted on the fixed ring (5).

3. Fixing device according to any one of claims 1 to 2, **characterised in that** said second element (11b) comprises an armature (20) of substantially parallelepiped shape, intended to enclose the sensor (10), said armature (20) being provided with an entrance comprising guiding edges cooperating with the sensor (10).

4. Fixing device according to any one of claims 1 to 3, **characterised in that** said second element (11b) comprising a mounting slide (20b) for the sensor (10), and elastic tongues (21) cooperating with the sensor (10) in order to immobilise said sensor in position.

5. Fixing device according to any one of claims 1 to 4, **characterised in that** said second element (11b) comprises first fixing elements (13) comprised within a plane perpendicular to the axis of the slide (20b) allowing the assembly of the second element (11b) upon the first element (11a) in the plane of said first element (11a).

6. Fixing device according to claim 5, **characterised in that** said second element (11b) comprises second fixing elements (19) comprised within a plane perpendicular to the axis of the slide (20b) and perpendicular to the plane of the first fixing elements (13) allowing the assembly of said second element (11b) upon the first element (11a) in a plane perpendicular to the plane of said first element (11a).

7. Fixing device according to any one of the preceding claims, **characterised in that** said first element (11a) comprises an annular disc (14) provided with a flange (15) that fits onto the fixed ring (5).

8. Fixing device according to claim 7, **characterised in that** said annular disc (14) constitutes a deflector that cooperates with a sealing gasket (8) of the roller or bearing, the surfaces of the annular disc (14) and of the flange (15) and of said sealing gasket (8) having a surface state complementary to the location of their contact surface, thus forming dynamic sealing.

9. Fixing device according to any one of the preceding claims, **characterised in that** the first and the second elements (11a) and (11b) are fabricated in different materials, such as a steel and a plastics material.

10. Fixing device according to any one of the preceding claims, **characterised in that** said first and second elements (11a, 11b) are assembled by welding.
